# EUROPÄISCHE PATENTSCHRIFT

(11) **EP 0 307 660 B1**
(45) Veröffentlichungstag und Bekanntmachung des Hinweises auf die Patenterteilung: **15.12.1993**
(21) Anmeldenummer: 88113575.0
(22) Anmeldetag: 20.08.1988
(51) Int. Cl.: H04N 7/087, H04N 5/782

(54) **Programmierverfahren für Videoheimgeräte**
Method for programming domestic video apparatuses
Procédé de programmation pour des appareils vidéo domestiques

(30) Priorität: 26.08.1987 DE 3728377
(43) Veröffentlichungstag der Anmeldung: 22.03.1989
(73) Patentinhaber: Deutsche Thomson-Brandt GmbH, 78003 Villingen-Schwenningen (DE)
(72) Erfinder: Eigeldinger, Norbert, D-7730 Villingen-Schwenningen (DE)

(56) Entgegenhaltungen:
- EP-A- 0 191 149
- DE-A- 3 335 082
- RUNDFUNKTECHNISCHE MITTEILUNGEN, Band 30, Nr. 5, 1986, Seiten 223-229, DE; G. EITZ et al.: "Videotext programmiert Videoheimgeräte (VPV)
- RUNDFUNKTECHNISCHE MITTEILUNGEN, Band 26, Nr. 6, 1982, Seiten 254-257, DE; G. HOFMANN et al.: "Videotext programmiert Videorecorder"
- RUNDFUNKTECHNISCHE MITTEILUNGEN, Band 29, Nr. 4, 1985, Seiten 161-169, DE; A. HELLER: "VPS-Ein neues System zur Beitragsgesteuerten Programmaufzeichnung"

## Beschreibung

Die Erfindung betrifft ein Verfahren zum Programmieren eines Videoheimgerätes nach dem Oberbegriff des Anspruchs 1.

Ein Verfahren der eingangs genannten Art ist unter dem Titel "Videotext programmiert Videoheimgeräte ", kurz als VPV-Verfahren bezeichnet, in der Zeitschrift "Rundfunktechnische Mitteilungen", Jahrgang 30, (1986), Heft 5, Seiten 223 - 229 beschrieben. Bei dem bekannten Verfahren werden zur Kennzeichnung von Sendebeiträgen und zum Programmieren von Videoheimgeräten spezielle Steuerzeichen enthaltende VPV-Daten verwendet, mit Hilfe deren die einzelnen Sendebeiträge innerhalb Sendebeitragsankündigungen aufweisenden, über Videotextsignale übermittelten Tafeln, sogenannten Videotexttafeln, eindeutig identifiziert werden können.

Zum eindeutigen Programmieren eines Videoheimgerätes auf Empfang und/oder Aufzeichnung eines gewünschten Sendebeitrages werden im allgemeinen Angaben über die Startzeit, die Stopzeit, das Sendedatum, die Programmquelle - z.B. die Sendeanstalt - und/oder gegebenenfalls die sogenannte VPS-Zeit benötigt. Nähere Einzelheiten zu den im Zusammenhang mit der "VPS-Zeit" stehenden Fragen sind in "Rundfunktechnische Mitteilungen", Jahrgang 29 (1985), Heft 4, Seiten 161 - 169 ausführlich erläutert.

Der Erfindung liegt die Aufgabe zugrunde, auch dann ein für den Benutzer einfaches Programmieren von Videoheimgeräten zu ermöglichen, wenn Videotexttafeln verwendet werden, die von dem erwähnten VPV-Vorschlag abweichen.

Diese Aufgabe wird durch das in Anspruch 1 aufgeführte Verfahren gelost. Nach der Erfindung werden die für den gewünschten Sendebeitrag benötigten Daten soweit als möglich automatisch der angewählten Videotexttafel entnommen und die benötigten Daten werden auf einen Programmierbefehl hin in den Programmierspeicher übertragen. Sofern zum vollständigen Programmieren des Videoheimgerätes diese Daten nicht vollständig sind, wird vorgesehen, daß noch fehlende Daten vom Benutzer - etwa nach Art eines Dialoges - mittels einer Fehlmeldung an einem Display angefordert werden.

Ist der zum Empfang der Videotexttafel erforderliche Videotextdecoder im Videoheimgerät angeordnet, so kann das übertragen der Daten in den Programmierspeicher über den geräteinternen Datenbus des Videoheimgerätes erfolgen.

Ist der Videotextdecoder außerhalb des Videorecorders angeordnet, beispielsweise in ein Fernsehempfangsgerät integriert, so kann das Übertragen der Daten in der Weise erfolgen, daß ein bei einem fernbedienbaren Videoheimgerät ohnehin vorgesehenes Fernbedienungsübertragungsverfahren verwendet wird. Werden beispielsweise die zum Programmieren benötigten, der Videotexttafel entnommenen und gegebenenfalls ergänzten Daten einer an dem Fernsehempfangsgerät angeordneten Infrarot-Sendeeinheit in geeigneter Weise zugeführt, kann so für das Videoheimgerät ein Programmieren über den ihm zugeordneten manuellen Infrarot-Fernbedienungsgeber simuliert werden. Der Benutzer kann dabei - etwa beim erstmaligen derartigen Programmieren - von der Ablaufsteuerung der Infrarot-Sendeeinheit aufgefordert werden, den Typ des zu programmierenden Videoheimgerätes einzugeben, beispielsweise in einer am Bildschirm des Fernsehempfangsgerätes eingeblendeten Vorschlagsliste mittels eines Cursors zu markieren. Einem Speicher, in dem eine Zuordnung von einzelnen Typen von Videoheimgeräten zu deren Fernbedienungsübertragungsverfahren gespeichert ist, kann die Infra-rot-Sendeeinheit dann das geeignete Übertragungsformat entnehmen.

Üblicherweise enthalten die auf den Videotexttafeln aufgeführten Programmankündigungen die Startzeit und die Bezeichnung des jeweiligen Sendebeitrages. In Weiterbildung der Erfindung ist vorgesehen, daß eine einstellbare Markierung, z.B. ein Cursor, automatisch in dem Bereich oder in der Zeile eingeblendet wird, wo die erste als Uhrzeit erkannte Zahl auftritt. Soll das Videoheimgerät, meistens ein Videorecorder, auf den so gekennzeichneten Sendebeitrag programmiert werden, so hat der Benutzer dies lediglich noch durch einfachen Tastendruck auf die Taste "Programmieren" seines hierfür vorgesehenen VPV-Fernbediengerätes, das etwa in die Fernseh-Fernbedienung mit aufgenommen sein kann, zu bewirken. Es kann vorgesehen sein, daß er in diesem Zusammenhang zuvor oder danach die Aufforderung erhält, für eine vollständige Programmierung des Recorders die noch fehlenden Daten einzugeben. Eine solche Aufforderung ergeht beispielsweise dann, wenn zum Programmieren erforderliche Daten der betreffenden Videotexttafel nicht oder nicht eindeutig automatisch entnommen werden konnten.

Der Cursor kann durch Steuerbefehl von einer Uhrzeit zu einer anderen vorwärts und/oder rückwärts bewegt werden, bis ein zum Programmieren vorgesehener Sendebeitrag durch den Cursor markiert ist.

Vorteilhafte Weiterbildungen der Erfindung sind in den Unteransprüchen beschrieben.

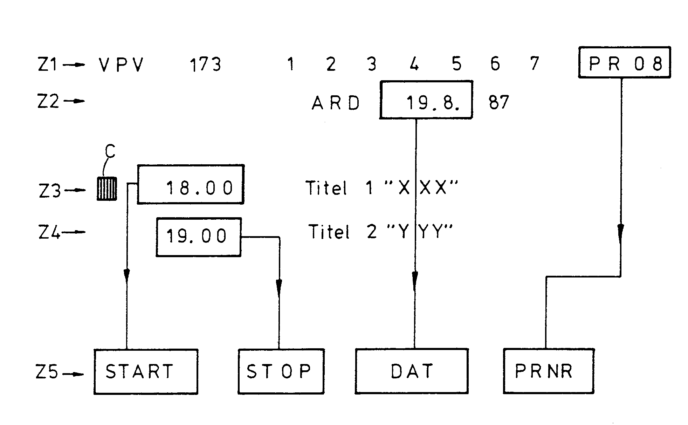

Weitere Vorteile, Merkmale und Einzelheiten der Erfindung werden im folgenden an einem bevorzugten Ausführungsbeispiel anhand der Zeichnung erläutert, die eine vier Zeilen Z1 - Z4 umfassende, teilweise modifizierte Videotexttafel darstellt.

Ein in der Zeile Z1 eingeblendeter Schriftzug VPV dient dem Benutzer als Hinweis, daß ein Programmiermodus angewählt wurde, bei dem die zum Programmieren benötigten Daten - soweit als möglich - der momentan angezeigten Videotexttafel, im dargestellten Beispiel die Tafel 173, wie in Zeile Z1 durch die neben der Bezeichnung VPV angeordnete Ziffer 173 ersichtlich, entnommen werden. In derselben Zeile folgen dann noch die Ziffern 1 - 7, jeweils mit einem Abstand zueinander; sie dienen zur Angabe des momentan zu belegenden Speicherplatzes im Programmierspeicher eines hier nicht dargestellten, zu programmierenden Videoheimgerätes. Am rechten Rand der Zeile Z1 ist "PR08" angezeigt. Hier war der Benutzer aufgefordert worden, die Programmnummer PRNR einzugeben, unter der an dem zu programmierenden Videoheimgerät oder Recorder die Frequenz oder der Kanal des Senders gespeichert ist, dessen Sendung empfangen und/oder aufgezeichnet werden soll. In Zeile Z2 deutet die Abkürzung ARD darauf hin, daß der gewünschte Sendebeitrag im Ersten Deutschen Fernsehprogramm ausgestrahlt wird. Hieran hat sich der Benutzer orientiert, als er auf automatische Aufforderung hin in Zeile Z1 zuvor als Programmnummer entsprechend der an seinem Videorecorder getroffenen Zuordnung die Ziffer "08" eingegeben hat.

In Zeile Z2 ist weiter noch der betreffende Sendetag, im dargestellten Beispiel der 19.08.1987, angezeigt.

In Zeile Z3 ist ein durch eine Schraffur markiertes Quadrat am Anfang der Zeile erkennbar. Es stellt einen Cursor C dar, der, wie weiter dieser Zeile Z3 zu entnehmen ist, einen um 18.00 Uhr beginnenden Sendebeitrag mit dem Titel 1 "XXX" markiert. In Zeile Z4 ist der sich daran anschließende Sendebeitrag mit der Startzeit 19.00 Uhr und dem Titel 2 "YYY" aufgeführt.

Im dargestellten Beispiel, in dem das Videoheimgerät zur Aufzeichnung des durch den Cursor C markierten Sendebeitrages mit dem Titel 1 "XXX" programmiert werden soll, wird nun durch Betätigen einer Taste "Programmieren" eines nicht dargestellten VPV-Fernbediengerätes die in derselben Zeile wie der Cursor angeordnete Uhrzeit als Startzeit START und die nächstfolgende, in der Zeile Z4 angeordnete Uhrzeit als Stopzeit STOP, die als Datum erkannte Zahl 19.08. als Sendedatum DAT sowie die zuvor erwähnte Kanal- oder Frequenzzuordnung PRNR als die für den gewünschten Sendebeitrag benötigten Daten, wie in Zeile Z5 symbolisch durch die Bezeichnungen START, STOP, DAT und PRNR als Datensatz dargestellt, zusammengefügt oder einzeln zum Programmierspeicher übertragen. Zur besseren Verdeutlichung sind die der - modifizierten - Videotexttafel aus den Zeilen Z1 - Z4 entnommenen Daten umrahmt und durch mit Pfeilen versehene Bezugslinien mit den entsprechenden Teilen des zu übertragenden Datensatzes aus Zeile Z5 verbunden.

Ist für den gewünschten Sendebeitrag eine VPS-Zeit erkannt, so kann vorgesehen sein, daß zum Programmieren bevorzugt die VPS-Zeit verwendet wird und/oder die Start- und/oder die Stopzeit lediglich als zusätzliche Sicherheit - sollte bei Empfang des Sendebeitrages die VPS-Kennung gestört sein - in den Programmierspeicher übernommen wird.

Nach erfolgter übertragung eines vollständigen Datensatzes wird in Zeile Z1 markiert, daß von den sieben Programmierplätzen im Programmierspeicher nunmehr der erste belegt ist; beispielsweise kann dies durch hier nicht dargestellte farbliche Unterlegung der Ziffer 1 der im Mittelfeld der Zeile Z1 angeordneten Ziffern 1 - 7 geschehen.

## Patentansprüche

1. Verfahren zum Programmieren eines Videoheimgerätes, insbesondere eines Videorecorders, für den Empfang oder das Aufzeichnen eines in einer Programmvorschautafel angekündigten Sendebeitrages, wobei in der Programmvorschautafel Programmquelle, Sendedatum, Startzeit, VPS-Zeit und/oder Stopzeit kennzeichnende Daten vollständig oder unvollständig enthalten sind, die für eine Programmierung, nach Selektion eines Sendebeitrages, in einen Programmierspeicher des Gerätes eingebbar sind, und im Gerät die für eine jeweilige Programmierung erforderlichen Daten einem Programmspeicherplatz zugeordnet sind, **dadurch gekennzeichnet**, daß die Daten automatisch auf für die Programmierung erforderliche Vollständigkeit überprüft und der angewählten Videotexttafel auf einen Programmierbefehl hin entnommen werden, daß bei Unvollständigkeit dieser einem Sendebeitrag zugeordneten Daten, die für die Programmierung erforderlich sind, eine Fehlmeldung an einem Display bewirkt wird, wodurch der Benutzer zur Eingabe der noch fehlenden Daten aufgefordert wird, und daß die Daten in den Programmierspeicher übertragen werden.

2. Verfahren nach Anspruch 1, **dadurch gekennzeichnet**, daß in Bezug auf die Programmquelle für die Eingabe noch fehlender Daten die Kanalnummer, die Frequenz oder die für den Fernsehempfänger oder das Videoheimgerät geltende Programmnummer auf dem Display angezeigt wird.

3. Verfahren nach Anspruch 1 oder 2, **dadurch gekennzeichnet**, daß eine vom Benutzer akzeptierte oder eingegebene Kanalnummer, Frequenz oder Programmnummer als Zuordnung zu der betreffenden Videotexttafel in einem Speicher so lange gespeichert bleibt, bis zu dieser Videotexttafel eine anderslautende Eingabe erfolgt.

4. Verfahren nach einem der Ansprüche 1 - 3, **dadurch gekennzeichnet**, daß die Videotexttafel automatisch nach Zahlen abgesucht wird, wobei - bezogen auf eine jeweils betrachtete Zeile -
a) beim Auftreten einer aus drei oder vier Ziffern mit einem von diesen eingeschlossenen Satzzeichen - wie Punkt, Doppelpunkt, Semikolon, Bindestrich, Leerschritt oder dergleichen - bestehenden Zahl - insbesondere, sofern unmittelbar daran anschließend ein Leer-, Steuer- oder Farbsteuerzeichen folgt - die Zahl als Uhrzeit
und/oder
b) beim Auftreten
aa) einer aus zwei, drei oder vier Ziffern mit einem von diesen eingeschlossenen und einem auf die letzte Ziffer unmittelbar folgenden Satzzeichen - wie Punkt, Doppelpunkt, Semikolon, Bindestrich, Schrägstrich - bestehenden Zahl
oder
bb) einer aus vier bis acht Ziffern mit gegebenenfalls zwei von diesen eingeschlossenen Satzzeichen - wie Punkt, Doppelpunkt, Semikolon, Bindestrich, Schrägstrich, Leerschritt oder dergleichen - bestehenden Zahl
oder
cc) einer aus ein oder zwei Ziffern bestehenden Zahl, der ein Satzzeichen - wie Punkt, Doppelpunkt, Semikolon, Bindestrich, Schrägstrich, Leerschritt oder dergleichen - und/oder eine einer Tabelle mit Monatsbezeichnungen - wie Januar, Februar, ..., Dezember; Jan, Feb, ..., Dez; Janvier, Février, ..., Décembre; I, II, ..., XII; oder dgl. - entnehmbare Bezeichnung unmittelbar nachfolgt oder vorausgeht,
die Zahl - gegebenenfalls mit durch entsprechende Ziffern - wie 01, 02, ..., 12 - ersetzter Monatsbezeichnung - als Sendedatum
und/oder
c) beim Auftreten einer besonders markierten, aus vier Ziffern bestehenden Zahl die Zahl als VPS-Zeit erkannt und dementsprechend für die Programmierung eines Empfangs- und/oder Aufzeichnungsauftrages herangezogen werden
und/oder
sich laufend - insbesondere im Sekundentakt - ändernde Zahlen unberücksichtigt bleiben.

5. Verfahren nach Anspruch 4, **dadurch gekennzeichnet**, daß beim Auftreten von Mehrdeutigkeiten bei der Erkennung der Zahlen der Benutzer automatisch aufgefordert wird, den betreffenden Zahlen die jeweils zutreffende Interpretation Programmquelle, Sendedatum, Uhrzeit bzw. VPS-Zeit zuzuordnen.

6. Verfahren nach Anspruch 4 oder 5, **dadurch gekennzeichnet**, daß eine bezüglich zu erkennender Zahlen automatisch nach Anspruch 5 erfolgte Interpretation so lange der betreffenden Videotexttafel mittels eines Speichers zugeordnet bleibt, bis zu dieser Videotexttafel eine anderslautende Eingabe erfolgt.

7. Verfahren nach einem der Ansprüche 4 - 6, **dadurch gekennzeichnet**, daß auf der Videotexttafel eine einstellbare Markierung, z.B. ein Cursor, automatisch in dem Bereich oder in der Zeile eingeblendet wird, wo die erste als Uhrzeit erkannte Zahl auftritt.

8. Verfahren nach Anspruch 7, **dadurch gekennzeichnet**, daß der Cursor durch Steuerbefehle, wie "Vorwärts" oder "Rückwärts", von einer als Uhrzeit erkannten Zahl auf die nächste oder auf die vorausgehende als Uhrzeit erkannte Zahl oder deren Bereich oder Zeile sprunghaft bewegbar ist.

9. Verfahren nach einem der Ansprüche 4 - 8, **dadurch gekennzeichnet**, daß auf den den gewünschten Sendebeitrag betreffenden Programmierbefehl hin die durch den Cursor markierte Uhrzeit als die Startzeit (START), die als VPS-Zeit erkannte Zahl, die als nächste Uhrzeit erkannte Zahl als die Stopzeit (STOP), die als Sendedatum erkannte Zahl (DAT) und/oder die die betreffende Programmquel-le kennzeichnenden Daten (PRNR) in den Programmierspeicher übertragen werden.

10. Verfahren nach Anspruch 9, **dadurch gekennzeichnet**, daß nicht die als Sendedatum erkannte Zahl, sondern die dem nachfolgenden Tag entsprechende Zahl in den Programmierspeicher übertragen wird, sofern die der durch den Cursor markierten Uhrzeit unmittelbar vorausgehende, als Uhrzeit erkannte Zahl größer ist als die durch den Cursor markierte Uhrzeit und zwischen diesen beiden Uhrzeiten keine als Sendedatum erkannte Zahl auftritt.

11. Verfahren nach Anspruch 9 oder 10, **dadurch gekennzeichnet**, daß der Benutzer vor der Übertragung an den Programmierspeicher bei unvollständigem Datensatz zur Eingabe der noch fehlenden Daten aufgefordert wird.

12. Verfahren nach Anspruch 9 oder 10, **dadurch gekennzeichnet**, daß der Benutzer nach der Übertragung eines nicht vollständigen Datensatzes in den Programmierspeicher zur Eingabe der noch fehlenden Daten aufgefordert wird und diese nach Vervollständigung oder Schritt für Schritt in den Programmierspeicher übertragen werden.

## Claims

1. Method for programming a home video equipment, in particular a video recorder, for the reception or the recording of a transmission announced in a programme pre-view list wherein the items of data identifying the programme source, the transmission date, the starting time, the VPS time and/or the finishing time are contained in full or in part in the programme preview list, which items of data can be entered into a programme store of the equipment for a programming after selection of a transmission and the items of data required for a programming are allocated a programme storage position in the equipment, characterised in that, the items of data are automatically checked for the completeness required for the programming and are extracted from the selected video text page in response to a programming command, that if these items of data associated with a transmission which are required for the programming are incomplete, an error message is given in a display whereby the user is requested to enter the missing items of data and that the items of data are transmitted into the programme store.

2. Method in accordance with Claim 1, characterised in that, for the entry of the missing items of data, the channel number, the frequency or the programme number applicable to the television receiver or the home video equipment in respect of the programme source is indicated in the display.

3. Method in accordance with Claim 1 or 2, characterised in that, a channel number, frequency or programme number accepted or entered by the user remains stored in a store as a pointer to the relevant video text page until such time as a different entry for this video text page occurs.

4. Method in accordance with any of the Claims 1 - 3, characterised in that, the video text page is automatically scanned line by line, whereby - with reference to a currently considered line -
a) upon the occurrence of a number which consists of three or four digits having a punctuation mark - such as, a full stop, a colon, a semi-colon, a dash, a space or the like - included therebetween, especially insofar as a space, control or colour control character directly follows thereon, then the number is recognised as the time of day
and/or
b) upon the occurrence of
aa) a number which consists of two, three or four digits having a punctuation mark - such as, a full stop, a colon, a semicolon, a dash, or an oblique dash - included therebetween and directly following the last digit
or
bb) a number which consists of four to eight digits possibly having two punctuation marks - such as, a full stop, a colon, a semi-colon, a dash, an oblique dash, a space or the like - included therebetween
or
cc) a number which consists of one or two digits that is immediately preceded or followed by a punctuation mark - such as, a full stop, a colon, a semi-colon, a dash, an oblique dash, a space or the like - and/or a term derivable from a table of monthly terms - such as, January, February, ..., December; Jan, Feb, ..., Dec; Janvier, Février, ..., Décembre; I, II, ..., XII; or the like,
then the number - possibly having the monthly term replaced by corresponding digits, such as 01, 02, ..., 12 - is recognized as the transmission date
and/or
c) upon the occurrence of a specially marked number which consists of four digits, then the number is recognised as the VPS time and each recognized number is correspondingly used for the programming of a reception and/or recording instruction
and/or
continuously changing numbers - especially at one second intervals - are not taken into consideration.

5. Method in accordance with Claim 4, characterised in that, if ambiguities occur in the recognition of the numbers, the user is automatically requested to assign the currently appropriate interpretation, programme source, transmission date, time of day or VPS time to the numbers concerned.

6. Method in accordance with Claim 4 or 5, characterised in that, an interpretation regarding the identification of numbers that has occurred automatically in accordance with Claim 5 is kept associated with the relevant video text page by means of a store until such time as a different entry for this video text page occurs.

7. Method in accordance with any of the Claims 4 - 6, characterised in that, an adjustable marking e.g. a cursor, is automatically blended-in in the region or in the line of the video text page where the first number identified as the time of day occurs.

8. Method in accordance with Claim 7, characterised in that, the cursor is movable in jumps by control commands such as "forwards" or "backwards" from one number identified as the time of day to the next or to the preceding number identified as the time of day or to its region or line.

9. Method in accordance with any of the Claims 4 - 8, characterised in that, upon the occurrence of the programming command relating to the desired transmission, the following are transmitted into the programme store, the time of day marked by the cursor as the starting time (START), the number identified as the VPS time, the number identified as the next time of day as the finishing time (STOP), the number identified as the transmission date (DAT) and/or the items of data identifying the relevant programme source (PRNR).

10. Method in accordance with Claim 9, characterised in that, the number corresponding to the next day rather than the number identified as the transmission date is transmitted into the programme store insofar as the number identified as the time of day immediately preceding the time of day marked by the cursor is greater than the time of day marked by the cursor and no number identified as a transmission date occurs between these two times of day.

11. Method in accordance with Claim 9 or 10, characterised in that, upon the occurrence of an incomplete set of items of data, the user is requested to enter the missing items of data before the transmission into the programme store.

12. Method in accordance with Claim 9 or 10, characterised in that, the user is requested to enter the missing items of data after the transmission of an incomplete set of items of data into the programme store and these missing items, after they have been completed, are transmitted step-by-step into the programme store.

## Revendications

1. Procédé pour programmer un appareil vidéo domestique, en particulier un magnétoscope, pour la réception ou l'enregistrement d'une émission annoncée dans un tableau d'aperçu de programme, les données caractérisant la source du programme, la date d'émission, l'heure de début, l'heure VPS et/ou l'heure d'arrêt étant contenues de manière complète ou incomplète dans le tableau d'aperçu de programme, données qui peuvent être entrées dans une mémoire de programmation de l'appareil pour une programmation après sélection d'une émission et les données nécessaires pour une programmation respective étant affectées dans l'appareil à un emplacement de mémoire de programme, **caractérisé en ce** que les données sont automatiquement contrôlées quant à leur intégralité pour la programmation et sont prises sur le tableau de vidéotexte sélectionné après un ordre de programmation, qu'en cas de non intégralité de ces données affectées à une émission qui sont nécessaires pour la programmation un état néant est provoqué sur un écran de visualisation, ce par quoi l'utilisateur est invité à entrer les données encore manquantes, et que les données sont transmises dans la mémoire de programmation.

2. Procédé selon la revendication 1, **caractérisé en ce** que par rapport à la source de programme pour l'entrée de données encore manquantes le numéro de canal, la fréquence ou le numéro de programme valable pour le récepteur de télévision ou l'appareil vidéo domestique est indiqué sur l'écran de visualisation.

3. Procédé selon la revendication 1 ou 2, **caractérisé en ce** qu'un numéro de canal accepté ou entré par l'utilisateur, une fréquence ou un numéro de programme comme affectation au tableau de vidéotexte concerné reste mémorisé dans une mémoire jusqu'à ce qu'une autre entrée soit réalisée pour ce tableau de vidéotexte.

4. Procédé selon l'une des revendications 1 à 3, **caractérisé en ce** qu'il y a une recherche automatique des nombres du tableau de vidéotexte, cependant que - en se référant à une ligne respectivement considérée -
a) lors de l'apparition d'un nombre constitué par trois ou quatre chiffres avec en particulier un signe de ponctuation - comme un point, deux points, un point-virgule, un trait d'union, un espace ou équivalent - compris dans ceux-ci, dans la mesure où un espace, un caractère de commande ou un caractère de commande de couleur suit directement, le nombre est reconnu en tant qu'heure
et/ou
b) lors de l'apparition
aa) d'un nombre constitué par deux, trois ou quatre chiffres avec un signe de ponctuation - comme un point, deux points, un point-virgule, un trait d'union, un trait oblique - compris dans ceux-ci et suivant directement le dernier chiffre
ou
bb) d'un nombre constitué par quatre à huit chiffres avec, le cas échéant, deux signes de ponctuation - comme un point, deux points, un point-virgule, un trait d'union, un trait oblique, un espace ou équivalent - compris dans ceux-ci
ou
cc) d'un nombre constitué par un ou deux chiffres qui est suivi ou précédé directement par un signe de ponctuation - comme un point, deux points, un point-virgule, un trait d'union, un trait oblique, un espace ou équivalent - et/ou une désignation que l'on peut prendre dans un tableau avec des désignations de mois - comme Januar, Februar ..., Dezember ; Jan, Feb, ..., Dez ; janvier, février, ..., décembre ; I, II, ..., XII ou équivalent,
le nombre - le cas échéant avec la désignation du mois remplacée par des chiffres correspondants - comme 01, 02, ..., 12 - est reconnu comme date d'émission
et/ou
c) lors de l'apparition d'un nombre marqué spécialement, constitué par quatre chiffres, le nombre est reconnu comme heure VPS et ces données sont utilisées pour la programmation d'une tâche de réception et/ou d'enregistrement
et/ou
qu'il n'est pas tenu compte des nombres qui varient continuellement - en particulier seconde par seconde.

5. Procédé selon la revendication 4, **caractérisé en ce** que lors de l'apparition d'ambiguïtés lors de la reconnaissance des nombres l'utilisateur est automatiquement invité à affecter la source de programme, la date d'émission, l'heure ou l'heure VPS qui concernent respectivement l'interprétation aux chiffres concernés.

6. Procédé selon la revendication 4 ou 5, **caractérisé en ce** qu'une interprétation qui a eu lieu selon la revendication 5 par rapport aux nombres à reconnaître reste affectée au moyen d'une mémoire au tableau de vidéotexte concerné jusqu'à ce qu'une autre entrée soit faite pour ce tableau de vidéotexte.

7. Procédé selon l'une des revendications 4 à 6, **caractérisé en ce** qu'un repère réglable, par exemple un curseur, est automatiquement en surimpression sur le tableau de vidéotexte dans la zone ou la ligne où apparaît le premier nombre reconnu comme étant l'heure.

8. Procédé selon la revendication 7, **caractérisé en ce** que le curseur peut être déplacé brusquement par des ordres de commande, comme "avant" ou "arrière", d'un nombre reconnu comme heure au prochain nombre ou au nombre précédent reconnu comme heure ou à sa zone ou ligne.

9. Procédé selon l'une des revendications 4 à 8, **caractérisé en ce** qu'après l'ordre de programmation concernant l'émission souhaitée, l'heure marquée par le curseur est transmise à la mémoire de programmation comme heure de début (START), le nombre reconnu comme heure VPS, le nombre reconnu comme heure prochaine comme l'heure d'arrêt (STOP), le nombre reconnu comme date d'émission (DAT) et/ou les données caractérisant la source de programme concernée (PRNR).

10. Procédé selon la revendication 9, **caractérisé en ce** que ce n'est pas le nombre qui est reconnu comme date d'émission mais le nombre correspondant au jour suivant qui est transmis à la mémoire de programmation dans la mesure où le nombre reconnu comme heure qui précède directement l'heure marquée par le curseur est supérieur à l'heure marquée par le curseur et qu'il n'apparaît pas de nombre reconnu comme date d'émission entre ces deux heures.

11. Procédé selon la revendication 9 ou 10, **caractérisé en ce** que l'utilisateur est invité, avant la transmission à la mémoire de programmation, à entrer les données encore manquantes en cas d'ensemble de données incomplet.

12. Procédé selon la revendication 9 ou 10, **caractérisé en ce** que l'utilisateur est invité, après la transmission d'un ensemble de données incomplet à la mémoire de programmation, à entrer les données encore manquantes et que celles-ci sont transmises à la mémoire de programmation après avoir été complétées ou pas à pas.
